# NEUE EUROPÄISCHE PATENTSCHRIFT

(11) **EP 0 346 505 B2**
(45) Veröffentlichungstag und Bekanntmachung des Hinweises auf die Entscheidung über den Einspruch: **07.05.1997**
(45) Hinweis auf die Patenterteilung: 05.05.1993
(21) Anmeldenummer: 88109436.1
(22) Anmeldetag: 14.06.1988
(51) Int. Cl.: B23B 25/02

(54) **Verfahren zur Erzeugung von Bruchspänen bei der Drehbearbeitung von Werkstücken**
Method of producing braking chips when turning work pieces
Méthode de découpage de copeaux pendant le tournage des pièces à usiner

(43) Veröffentlichungstag der Anmeldung: 20.12.1989
(73) Patentinhaber: HEGENSCHEIDT-MFD GmbH, D-41812 Erkelenz (DE)
(72) Erfinder: Schneider, Friedhelm Dr. Ing, D-5144 Wegberg (DE); Köpnick, Klaus Dipl. Ing, D-5650 Solingen 19 (DE); Wowra, Henrik, D-5133 Gangelt (DE)
(74) Vertreter: Castell, Klaus, Dr.-Ing.

(56) Entgegenhaltungen:
- DE-A- 333 189
- FR-A- 2 145 314
- FR-A- 2 242 184
- SU-A- 795 729
- PATENT ABSTRACTS OF JAPAN, Band 11, Nr. 1 (M-550)[2448], 6. Januar 1987; & JP-A-61 182 705 (TOCHIGI PREF GOV) 15-08-1986
- Druckschrift "Radsatzdrehbänke" der Maschinenfabrik Deutschland GmbH, Dortmund, 1949.
- Druckschrift "Hochleistungs-Radsatz-Drehbänke für Wagen-,Tender- und Lokomotiv-Radsätze" der Maschinenfabrik Deutschland GmbH, Dortmund, 1950.
- Zeitschrift "Werkstatt und Betrieb", Jahrgang 109 (1976), Heft 4, Seite 244
- "Dubbel, Taschenbuch für den Maschinenbau", Springer-Verlag, 1953, Seite 648

## Beschreibung

Die Erfindung betrifft ein Verfahren zur Erzeugung von Bruchspänen bei der Drehbearbeitung von Werkstücken mittels einer sich im Verlauf der Werkstückumdrehung verändernden Vorschubgeschwindigkeit des Drehwerkzeugs, gemäß dem Oberbegriff der unabhängigen Ansprüche 1 und 7.

Ein gattungsgem. Verfahren ist aus den Schriften "Radsatzdrehbänke" der Maschinenfabrik Deutschland GmbH, Dortmund, 1949 und "Hochleistungs- Radsatz-Drehbänke für Wagen-, Tender- und Lokomotiv-Radsätze" der Maschinenfabrik Deutschland GmbH Dortmund, 1950 bekannt.

Die dort beschriebenen Verfahren führen in vielen Fällen zu einem Spanbruch. Mit Sicherheit ist ein Spanbruch jedoch nicht zu erzielen. Vorallem sind aber häufig Legierungen vorhanden, bei denen eine einfache, plötzliche Querschnittsänderung des Spanes nicht ausreicht, um einen sicheren Spanbruch zu gewährleisten.

Der vorliegenden Erfindung liegt damit die Aufgabe zugrunde, ein Verfahren der eingangs beschriebenen Art vorzuschlagen, bei dem mit Sicherheit ein Spanbruch zu erzielen ist.

Die vorgenannte Aufgabe ist bei einem Verfahren der eingangs beschriebenen Art erfindungsgemäß mit den Merkmalen des Patentanspruchs 1 gelöst. Da zwischenzeitlich zwischen den deutlichen Veränderungen der Vorschubgeschwindigkeit in Umfangsrichtung mit der ursprünglichen konstanten Vorschubgeschwindigkeit gefahren wird, ergeben sich zwischen den genannten Stellen längere gerade Abschnitte des Vorschubweges. Diese geraden Abschnitte sind von Vorteil. Es wird nämlich durch diese geraden Abschnitte ein sicherer Spanbruch auch dann erreicht, wenn die kurzzeitige deutliche Veränderung der Vorschubgeschwindigkeit für sich allein nicht zum Spanbruch führt. Es wird nämlich dann, irgendwo auf dieser genannten geraden Strecke mit einer sich aus der deutlichen Veränderung der Vorschubgeschwindigkeit ergebenden Spitze des hierdurch entstehenden Vorschubweges irgendwo im Bereich einer solchen geraden Strecke einer vorherigen oder nachfolgenden Werkstückumdrehung gegen diese gerade Strecke gestoßen, wodurch die Spandicke in diesem Bereich kurzfristig zu Null wird und damit ein sicherer Spanbruch eintritt. Die Einhaltung einer genauen Phasenlage ist nicht erforderlich und dennoch tritt ein sicherer Spanbruch ein. Gleichzeitig tritt bei der erfindungsgemäßen Art der Vorschubbewegung überraschenderweise ein völlig normales Drehbild auf, das so aussieht wie ein übliches bekanntes Drehbild, das erwartet wird von einer Bearbeitung des Werkstückes mit einem konstanten Vorschub der Werkzeugschneide.

Um beliebige Konturen des Werkstückes auf diese Art zerspanen zu können muß darauf geachtet werden, daß die Werkzeugschneide in jedem Fall, so auch während der Bewegung unter einem veränderten skalaren Betrag der Vorschubgeschwindigkeit, sich entlang der zu erzeugenden Werkstückkontur bewegt. Dies aber ist grundsätzlich schon bekannt aus dem eingangs erwähnten Stand der Technik.

Die vorgenannte Aufgabe ist weiter bei einem Verfahren der eingungs beschriebenen Art auch erfindungsgemäß nach den kennzeichnenden Merkmalen des unabhängigen Anspruchs 7 gelöst.

Vorteilhafte Ausgestaltungen des erfindungsgemäßen Verfahrens sind beschrieben in den Unteransprüchen 2 bis 6 und 8-10.

Das erfindungsgemäße Verfahren kann grundsätzlich z.B. mit jeder CNC-gesteuerten Drehmaschine durchgeführt werden, da eine solche CNC-Steuerung programmierbar ist und es daher möglich ist, die gewünschten Werkzeugbewegungen zur Durchführung des erfindungsgemäßen Verfahrens einzuprogrammieren. Handelsübliche CNC-Steuerungen für Werkzeugmaschinen sind hierzu durchaus geeignet. Allerdings ist es denkbar, daß verschiedene handelsübliche Steuerungen nicht ohne geeignete Anpassung des internen Betriebssystems (Betriebssoftware) verwendbar sind.

Dies ist jedoch für den einschlägigen Fachmann ohne weiteres erkennbar und es kann ebenso der einschlägige Fachmann im notwendigen Umfang und in geeigneter Weise das interne Betriebssystem an die gestellte Aufgabe anpassen. Damit liegt also in der bekannten Kombination einer Werkzeugmaschine mit einer Zugeordneten und geeigneten CNC - Steuerung bereits eine Einrichtung vor zur Durchführung des erfindungsgemäßen Verfahrens.

Insbesondere jedoch bei der Schwerzerspanung, wie z.B. bei der Reprofilierung von Eisenbahnradsätzen, werden Werkzeugmaschinen verwendet, bei denen das Werkzeug auf Schlitten angeordnet ist, die über Hydraulikzylinder, also über hydraulische Linearantriebe, bewegt werden. Üblicherweise erfolgt hierbei die Steuerung des Weges des Werkzeuges über eine Kopierschablone mit einem bekannten hydraulischen Kopierfühler, wobei dieser Kopierfühler die Gesamtmenge des pro Zeiteinheit angelieferten Hydrauliköls, also den Hydraulikstrom, entsprechend der abzufahrenden Kontur auf die zugeordneten linearen Schlittenantriebe, also auf die zugeordneten Hydraulikzylinder, sinnvoll verteilt. Der ankommende Hydraulikstrom selbst wird hierbei von einer sogen. Servoventileinheit in seiner Größe geregelt. Mit der Größe des durch die Servoventileinheit geregelten Hydraulikstromes wird die Grundvorschub-geschwindigkeit bestimmt.

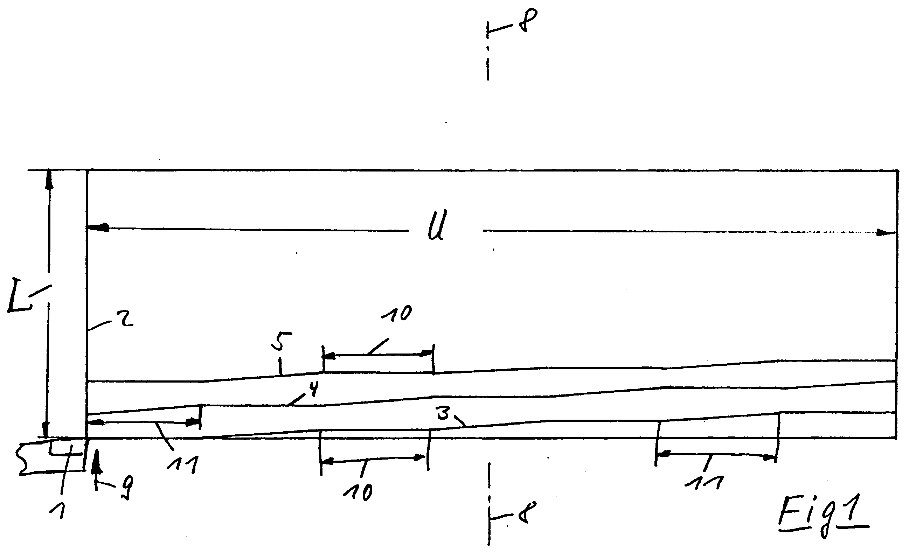

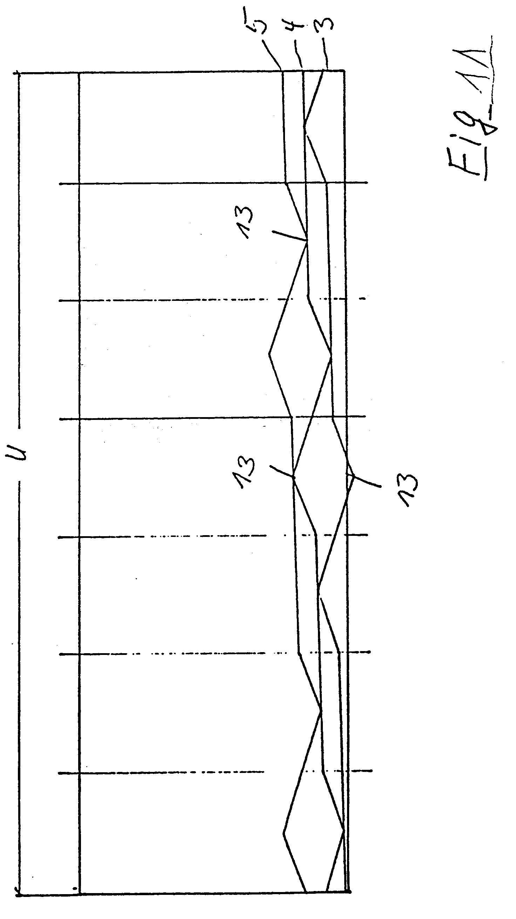

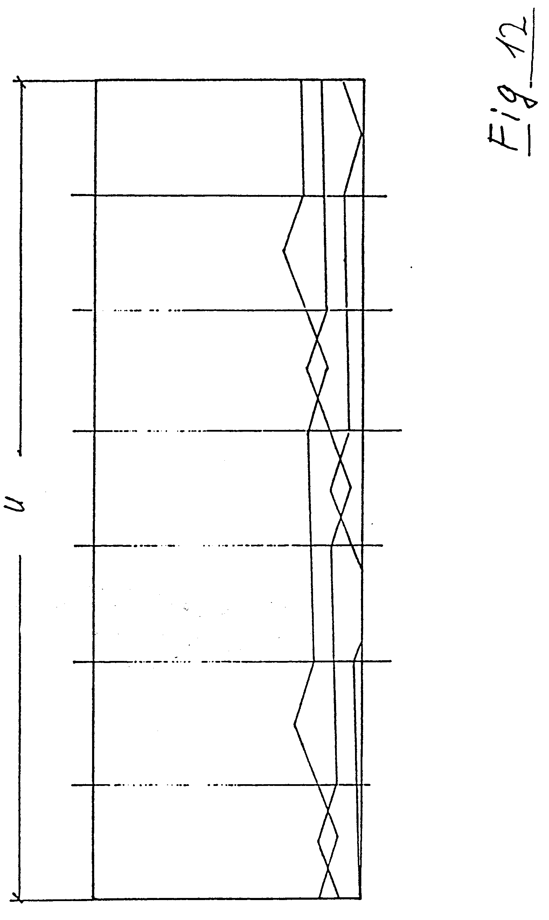

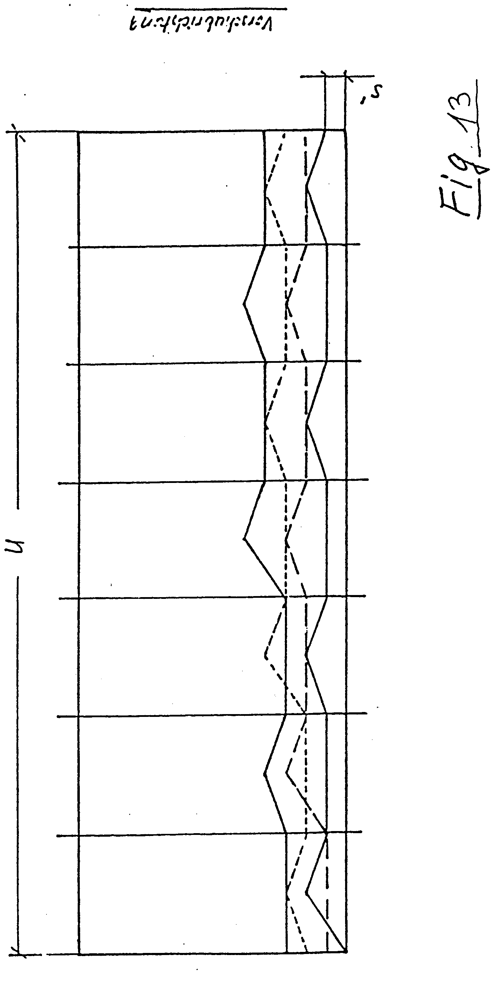

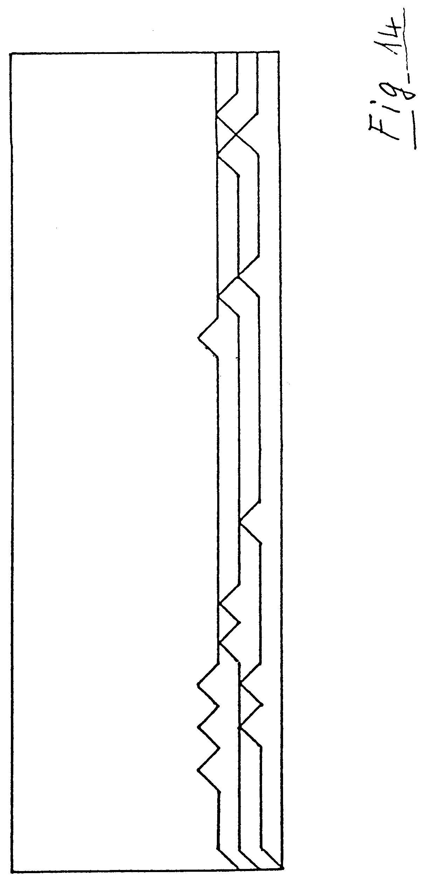

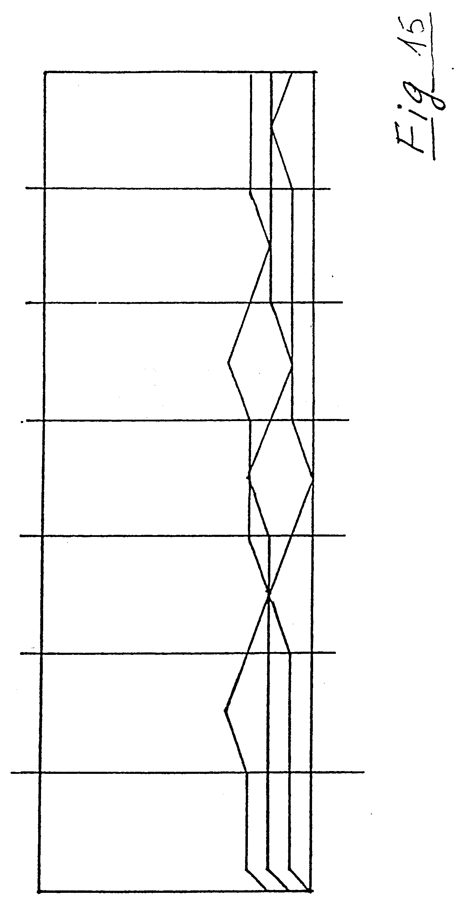

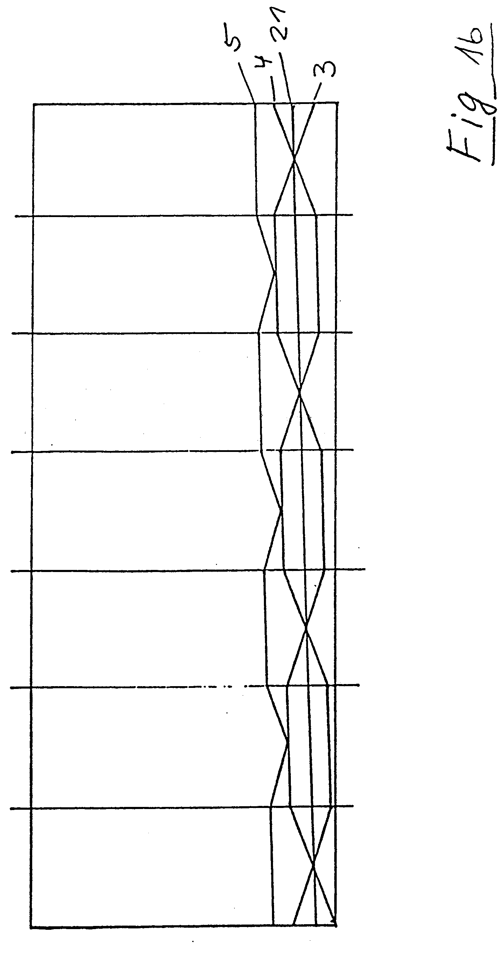

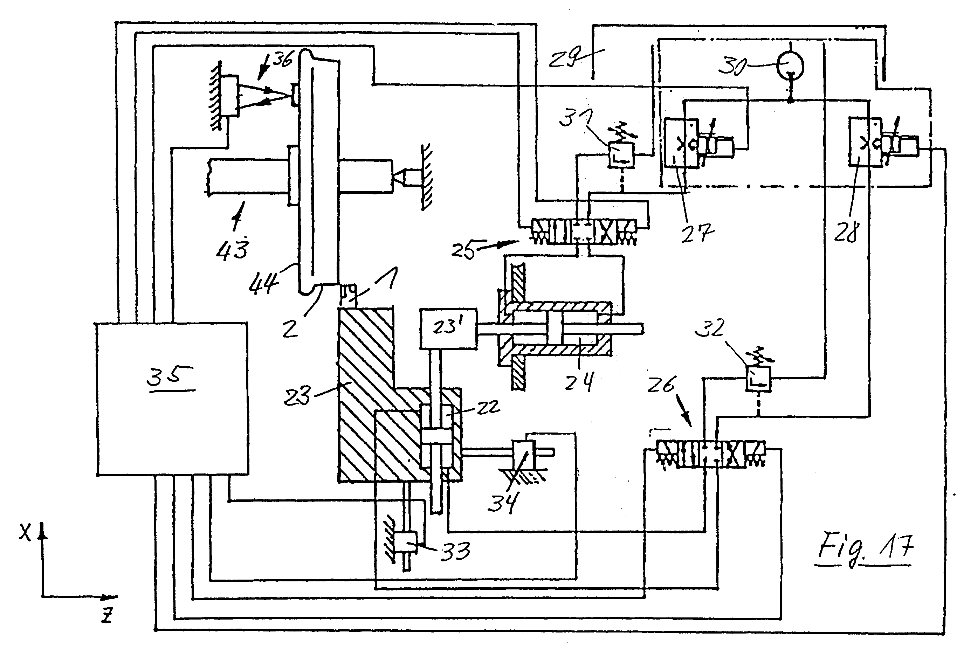

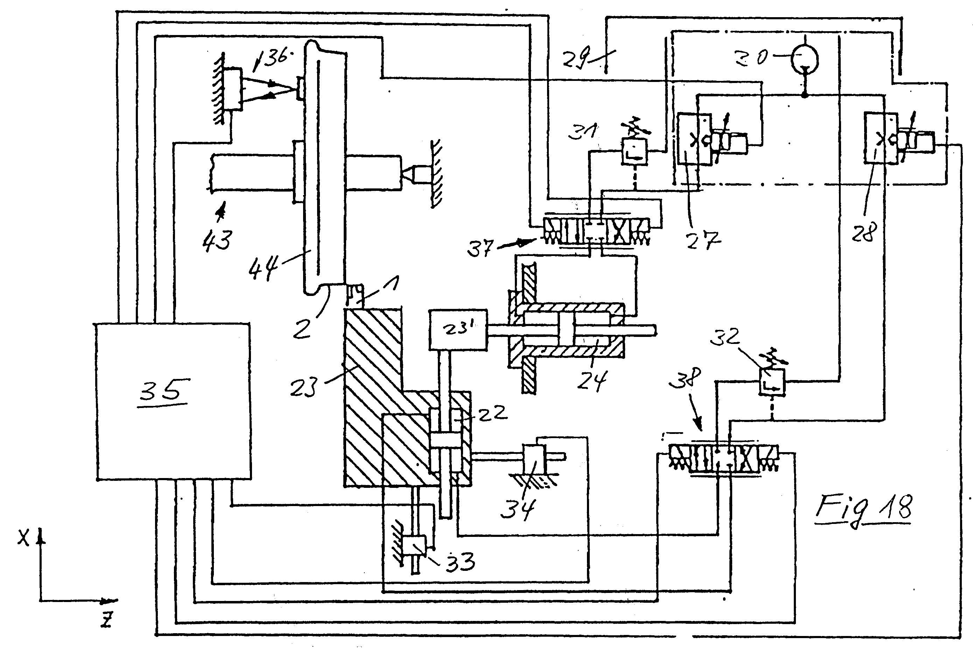

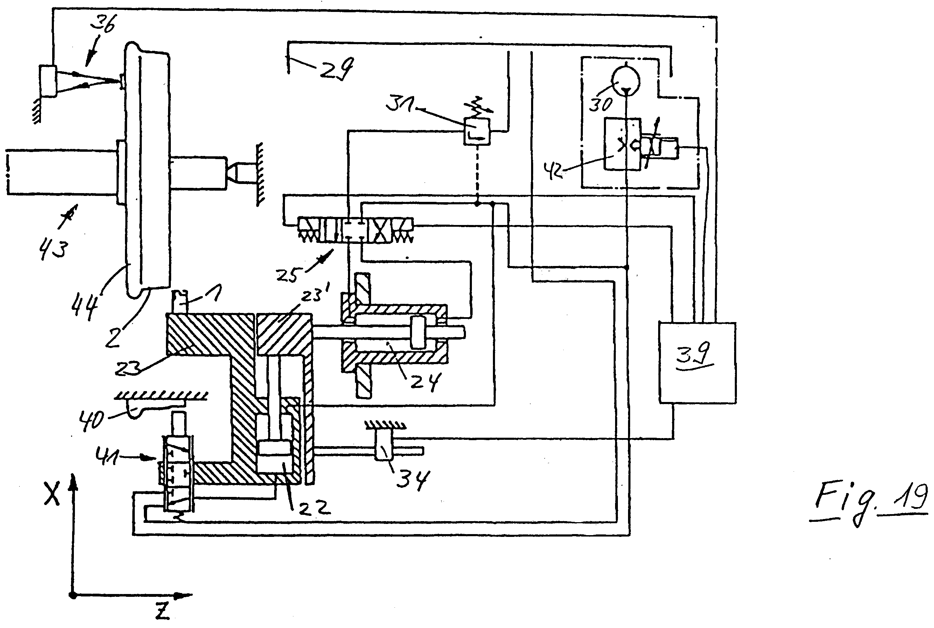

Die Erfindung soll nun anhand verschiedener Zeichnungen, die einerseits den hydraulischen Steuerungsteil einer Einrichtung, die zur Durchführung des erfindungsgemäßen Verfahrens geeignet ist und andererseits Diagramme über verschiedene Vorschubwege zeigen, näher erläutert werden. Die Diagramme über verschiedene Vorschubwege sind dargestellt in den Figuren 1 bis 17. Die Figuren 18 bis 20 zeigen den angesprochenen hydraulischen Steuerungsteil einer erfindungsgemäßen Maschine in unterschiedlichen Ausgestaltungen.

Die Figuren 1 bis 17 zeigen die Abwicklung der Oberfläche eines zylindrischen Werkstückes. Das zylindrische Werkstück hat hierbei den Umfang U und in Richtung seiner Rotationsachse 8 die Länge L. Diese Definition, die nur in Figur 1 eingetragen ist, soll für alle Figuren 1 bis 17 gelten. In der Figur 1 ist weiterhin eine Werkzeugschneide 1 am Umfang des Werkstückes angesetzt, die sich zur Herstellung der im Ausführungsbeispiel zylindrischen Werkstückkontur 2 mit Vorschubgeschwindigkeit in Richtung des Pfeils 9 bewegt, während sich gleichzeitig das Werkstück um die Rotationsachse 8 dreht. Ist die Vorschubgeschwindigkeit der Werkzeugschneide 1 stets gleichbleibend, 50 würde auf dem Umfang U eine gleichmäßig sich fortsetzende Rille nach Art eines Gewindes entstehen. Dies wäre die übliche Arbeitsweise für die Werkzeugschneide 1. Spanbruch wird hierdurch nicht erreicht. Eine andere Bewegungsform für das Werkzeug 1 ist im eingangs beschriebenen Stand der Technik dargelegt.

Hierbei wird die Werkzeugschneide 1 in folgender Art verfahren. Während sich die aus Umfang U und Länge L gebildete Oberfläche des Werktückes infolge der Drehung des Werkstückes um die Rotationsachse 8 kontinuierlich an der Werkzeugschneide 1 vorbei bewegt, wird nach der Variante in Figur 1 die Werkzeugschneide 1 nicht kontinuierlich in Richtung des Pfeils 9 bewegt, sondern vielmehr diskontinuierlich. Hierdurch entstehen die Vorschublinien 3 bis 5, die für drei Umdrehungen des Werkstückes zur Erzeugung der Werkstückkontur 2 dargestellt sind. So weist jede Vorschublinie 3 bis 5 Abschnitte 10 auf, in denen eine Vorschubbewegung in Richtung des Pfeils 9 durch die Werkzeugschneide 1 nicht ausgeführt wird. Dem aber schließen sich Abschnitte 11 an, in denen eine rasche Vorwärtsbewegung der Werkzeugschneide 1 erfolgt. Hierbei ist anzustreben, daß der Bereich 11 möglichst kurz ist, denn je rascher die Vorwärtsbewegung der Werkzeugschneide 1 erfolgt, um so sicherer ist ein Bruchspan zu erwarten. Hierbei ist es jedoch nicht erforderlich, daß die Längen der Strecken 10 und 11 in Umfangsrichtung gleich sind. Sie können vielmehr völlig unterschiedlich sein. Geschieht jedoch die Vorwärtsbewegung der Werkzeugschneide 1 in Richtung des Pfeils 9 in den Gebieten 11 sehr rasch, so ist zu erkennen, daß über die Distanz 11 immer eine rasche Querschnittsveränderung des Spans eintritt, die bereits ausreicht um für einen Spanbruch zu sorgen. Der Spanbruch tritt hierbei um so sicherer ein, je rascher im Bereich 11 die Vorwärtsbewegung der Werkzeugschneide 1 in Richtung des Pfeils 9 ist.

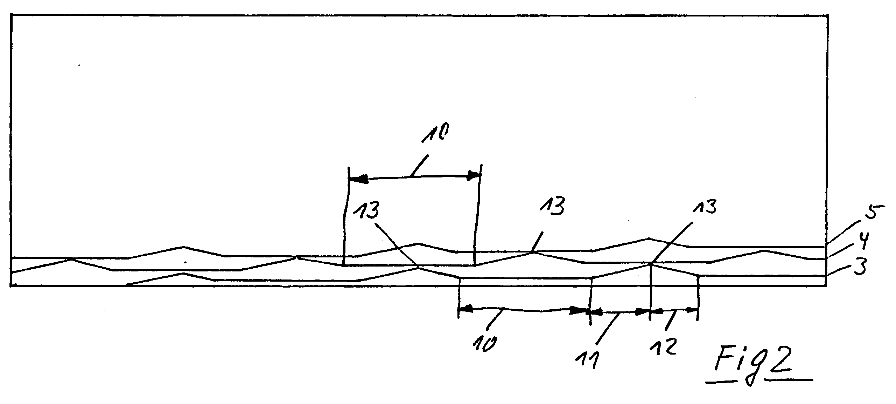

Vielfach sind jedoch Legierungen vorhanden, bei denen eine einfache plötzliche Querschnittsveränderung des Spanes nicht ausreichend ist um einen sicheren Spanbruch zu gewährleisten. Daher wird erfindungsgemäß folgendes Verfahren vorgeschlagen. Figur 2 zeigt daher eine Werkstückoberflächenabwicklung wie Figur 1. Die in Figur 2 und den weiteren Figuren nicht mehr eingetragene Werkzeugschneide 1 (siehe Figur 1) verfährt nach Figur 2 auf den Vorschublinien 3, 4 und 5 im Verlaufe von drei Umdrehungen, wobei in der Variante nach Figur 2 jedoch dafür gesorgt ist, daß der Abschnitt 11 die Werkzeugschneide 1 rasch so weit in das Werkstück hineinführt, daß an Punkten 13 ein gerader Abschnitt 10 der jeweils nächsten Vorschublinie getroffen wird, wodurch dort an den Punkten 13 die Spandicke zu Null wird, wodurch der Span mit Sicherheit gebrochen wird. Die Punkte 13 müssen hierbei nicht einen exakt gleichmäßigen Abstand voneinander aufweisen oder in einer exakten Phasenverschiebung zu entsprechenden Werkzeugbewegungen der vorangegangenen Werkstückumdrehung liegen, sondern können jeweils im Bereich der Abschnitte 10 an beliebiger Stelle auftreten. Wählt man nun die Länge des Abschnittes 11 in Umfangsrichtung genügend kurz, so ist es bei der Programmierung der Steuerung, mit der die Bewegung der Werkzeugschneide 1 entsprechend der Vorschublinien 3, 4 und 5 erzeugt wird, nicht mehr erforderlich auf den Umfang des Werkstückes zu achten, weil ja nur an den Stellen Spanbruch nicht eintreten würde, an denen sich bei den Vorschublinien 3, 4 und 5 jeweils Abschnitte 11 in Vorschubrichtung des Werkstükkes übereinander anordnen würden. Das aber wäre ein seltener Zufall, der nicht berücksichtigt werden muß. Es kann also sehr einfach und ohne Berücksichtigung des Werkstückdurchmessers die maximale Länge der Späne bis zum Bruch einfach durch die Definition der Länge des Abschnittes 10 bestimmt werden. Damit wird es erstmals auch möglich einen sicheren Spanbruch zu gewährleisten, ohne daß das Werkzeug oder die Werkzeugschneide mit irgendeiner hohen Frequenz schwingt, was ein schlechtes Drehbild ergibt, und ohne daß die Vorschubbewegung an die Drehzahl des Werkstückes gekoppelt werden muß um einen umdrehungsbezogenen Vorschub zu erreichen und um zu erzwingen, daß bestimmte Bewegungspunkte und damit Schnittlinien am Werkstück exakt übereinander fallen (wie dies z.B. bei der europäischen Veröffentlichung Nr. 0197172 erforderlich ist). Vielmehr ist es möglich nach dem Verfahren der Erfindung einen Zeitvorschub zu wählen. Gleichwohl kann es auch bei dem Verfahren der Erfindung, wie später noch beschrieben wird, vorteilhaft sein, mindestens das Vollenden jeweils einer vollen Werkstückumdrehung festzustellen.

Dadurch, daß die Werkzeugschneide 1 in den Abschnitten 11 so weit vorfahren muß, daß sie die nächstspätere Vorschublinie auf einem Abschnitt 10 trifft, würde der Gesamtvorschubweg pro Werkstückumdrehung zu rasch anwachsen. Darum wird bei Erreichen des Punktes 13 in einem nachfolgenden Abschnitt 12 die Werkzeugschneide 1 wieder so weit zurückgeführt, daß insgesamt über eine Umdrehung des Werkstückes gesehen ein vertretbarer oder gewünschter Gesamtvorschub erreicht wird.

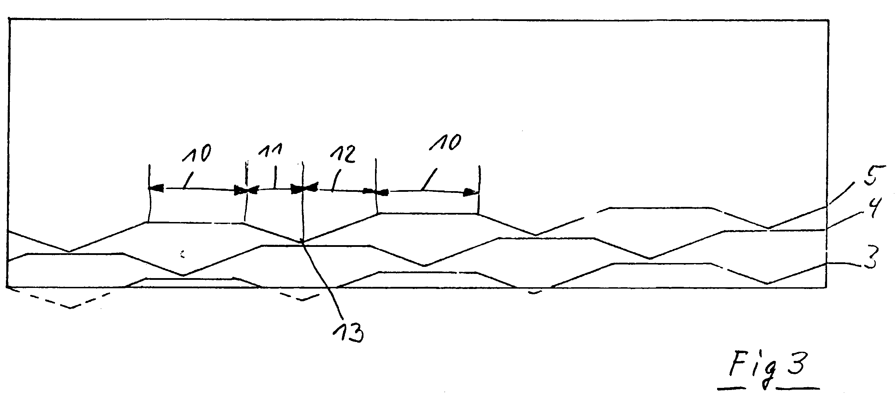

Die Figur 3 zeigt eine Variante, bei der die Vorschublinien 3, 4 und 5 einen anderen Verlauf aufweisen. Auch bei der Variante nach Figur 3 sind Abschnitte 10 vorhanden, bei denen die Werkzeugschneide 1 keine Vorschubbewegung durchführt. Auch bei der Variante nach Figur 3 schließen sich den Abschnitten 10 Abschnitte 11 mit einer raschen Vorschubbewegung der Werkzeugschneide 1 an. Allerdings erfolgt diese Vorschubbewegung nun nicht mehr in Vorschubrichtung sondern entgegengesetzt zur Vorschubrichtung. Auch hierbei kann diese entgegengesetzt zur Vorschubrichtung erfolgende Bewegung der Werkzeugschneide 1 im Abschnitt 11 soweit zurück erfolgen, daß ein gerader Abschnitt 10 einer Vorschublinie einer vorhergehenden Umdrehung getroffen wird. Auch hierdurch entstehen wieder Punkte 13, die die Spandicke zu Null werden lassen und damit einen sicheren Spanbruch gewährleisten. Auch in der Ausführungsform nach Figur 3 schließt sich dem Abschnitt 11 ein Abschnitt 12 an, in dem die Schneide 1 wieder genügend weit in das Werkstück hineingefahren wird um einen Vorschub zu erreichen. Hierbei liegt der sich dem Abschnitt 12 nach rechts anschließende Abschnitt 10 in axialer Richtung des Werkstückes weiter vor als der vorangehende Abschnitt 10 links vom Abschnitt 11. Hierdurch wird insgesamt, obwohl sich in den Abschnitten 10 das Werkzeug nicht in Vorschubrichtung bewegt, bezogen auf jede Umdrehung des Werkstückes, ein Gesamtvorschub erreicht.

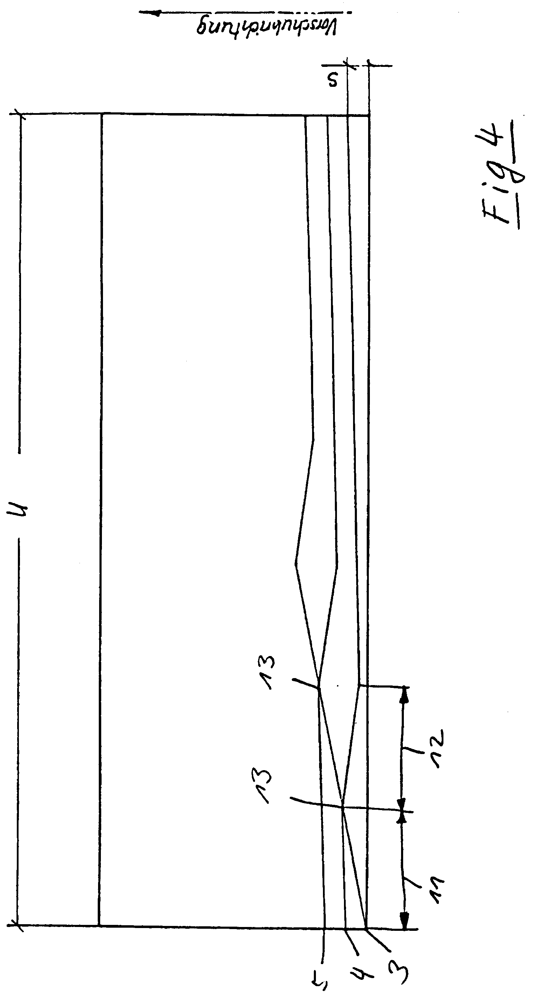

Figur 4 zeigt nun eine Variante, bei der die Werkzeugschneide 1 eine konstante Vorschubgeschwindigkeit aufweist und hierbei während einer Umdrehung des Werkstückes den Vorschubweg "S" zurücklegt. Die zulässige maximale Spanlänge kann hier etwa dem Umfang des Werkstückes entsprechen. Es wird dann der kontinuierlichen Vorschubgeschwindigkeit an einer Stelle eine rasche Vorwärtsbewegung der Werkzeugschneide 1 im Bereich 11 überlagert. Der im Bereich 11 von der Werkzeugschneide 1 zurückgelegt Weg muß hierbei nicht größer sein als der Vorschubweg "S", so daß es während der nächsten Umdrehung des Werkstückes wieder dazu kommt, daß die normale Vorschublinie die vorhergende Vorschublinie im Bereich 11 wieder am Punkt 13 trifft, so daß dort die Spandicke wiederum zu Null wird. Hierzu muß lediglich darauf geachtet werden, daß jeweils eine neue rasche Vorwärtsbewegung der Werkzeugschneide 1 zur Erzeugung des Abschnittes 11 immer erst dann erfolgt, wenn mindestens eine Umdrehung zuzüglich der Umfangslänge des Abschnittes 11 zurückgelegt ist. Hierbei kommt es nicht darauf an, daß die nächste rasche Vorwärtsbewegung der Werkzeugschneide 1 exakt dann beginnt, wenn eine Umdrehung zuzüglich des Umfangsweges des Abschnittes 11 zurückgelegt ist, sondern es muß lediglich darauf geachtet werden, daß mindestens diese Strecke zurückgelegt ist. Ist die tatsächlich zurückgelegte Strecke jedoch größer, so ist dies ohne Bedeutung. Es kommt dennoch zum sicheren Spanbruch. Auch hier schließt sich dem Abschnitt 11 wieder ein Rückzugsabschnitt 12 an, der bis auf die normale Vorschublinie 3, 4 oder 5 die Werkzeugschneide 1 zurückführt, um den insgesamt durchfahrenen Vorschub nicht zu groß werden zu lassen.

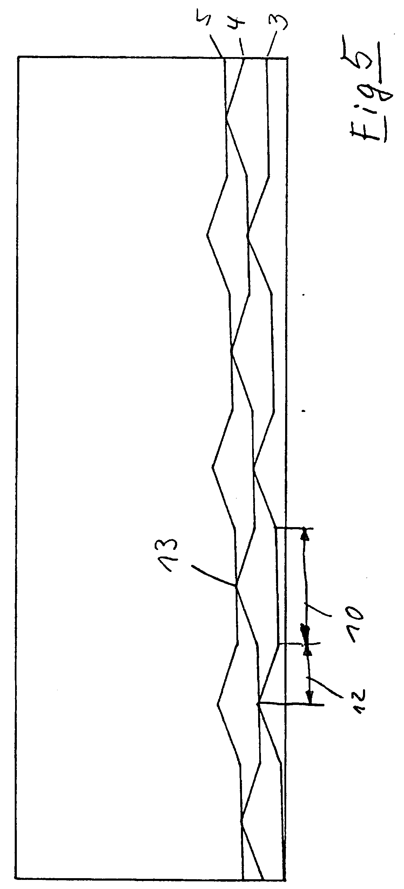

Figur 5 zeigt eine Variante mit Vorschublinien 3, 4 und 5 ganz ähnlich dem Verlauf nach Figur 2. Während jedoch in Figur 2 die Abschnitte 10 ohne Vorschubbewegung der Werkzeugschneide 1 waren, weist die Werkzeugschneide 1 nach dem Ausführungsbeispiel in Figur 5 in den Abschnitten 10 eine Vorschubbewegung auf. Nach dem Ausführungsbeispiel in Figur 5 wird die Werkzeugschneide 1 mit einer kontinuierlichen Vorschubbewegung, so wie im Ausführungsbeispiel nach Figur 4, vorwärts geführt und von den raschen Vorschubbewegungen überlagert, so wie dies zu Figur 4 beschrieben wurde. Das Ausführungsbeispiel nach Figur 5 kann somit als Kombination der Varianten nach Figur 2 und Figur 4 angesehen werden. Im Abschnitt 12 wird nach der Variante nach Figur 5 die Werkzeugschneide zurückgeführt auf die Vorschublinie des kontinuierlichen Vorschubs.

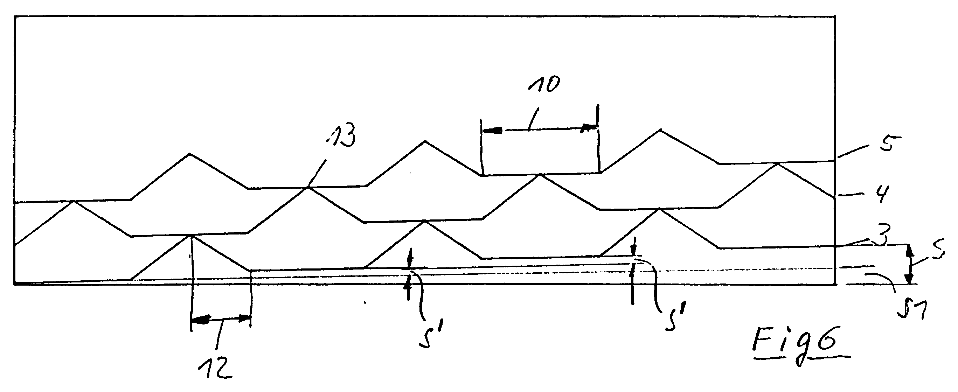

Die Variante nach Figur 6 ist ganz ähnlich der Variante nach Figur 5. Jedoch ist hier der Grundvorschub S 1 kleiner als der Gesamtvorschubweg "S". Auch dies ist ein Mittel zur Beeinflussung des Oberflächenbildes des Werkstückes. Die Bewegung der Werkzeugschneide erfolgt im wesentlichen so wie zu Figur 5 bereits beschrieben. Jedoch wird in den Abschnitten 12 die Werkzeugschneide nicht wieder zurückgeführt bis auf die Linie des Grundvorschubes, der dann insgesamt während einer Umdrehung zum Vorschubweg S 1 führen würde. Vielmehr wird die Werkzeugschneide in der Variante nach Figur 6 in den Abschnitten 12 nicht ganz zurückgeführt bis auf die Linie des Grundvorschubes S 1, so daß zwischen der Linie des Grundvorschubes S 1 und der ersten Rückführung der Werkzeugschneide in einem ersten Abschnitt 12 ein Abstand S' entsteht. Beim nächsten Abschnitt 12 wird wiederum die Werkzeugschneide 1 nur soweit zurückgenommen, daß gegenüber der Linie S' wiederum ein Abstand S' verbleibt, so daß der Gesamtvorschub "S" während einer Umdrehung sich ergibt aus dem Weg des Grundvorschubes S 1 und der Summe der Vorschübe S'.

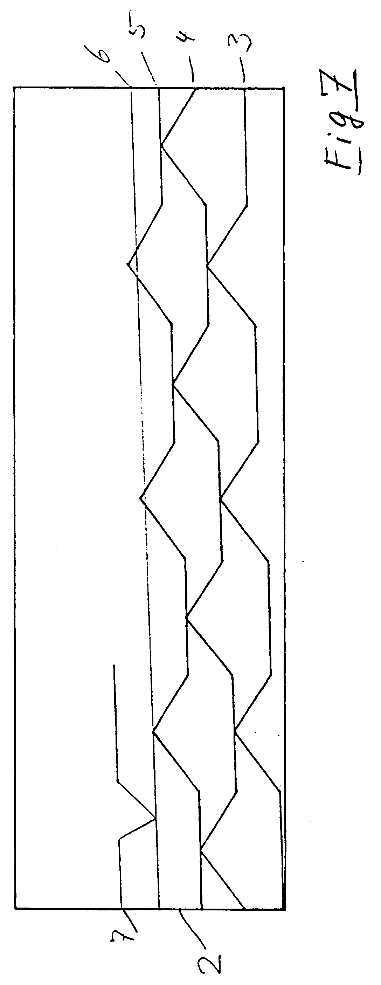

Die Variante nach Figur 7 entspricht im wesentlichen der Variante nach Figur 6. In Figur 7 ist jedoch gezeigt, daß es auch möglich ist, die Bewegungscharakteristik der Werkzeugschneide zu verändern, was besonders dann von Bedeutung sein kann, wenn die Werkstückkontur 2 nicht, wie der Einfachheit halber in Figur 7 dargestellt, zylindrisch sondern stark gekrümmt ist, wie dies z.B. bei der Kontur eines Eisenbahnrades der Fall ist. Es ist dann z.B. möglich, bei der der Vorschublinie 5 folgenden Vorschublinie 6 diese Vorschublinie als kontinuierlichen Vorschub zu fahren und die nächste Vorschublinie 7 mit umgekehrter Bewegung der Werkzeugschneide 11, so wie zu Figur 3 beschrieben, auszuführen. Auch hierdurch wird wiederum ein sicherer Spanbruch erreicht und auch das gewünschte Oberflächenbild geschaffen. Durch die Einfügung der Vorschublinie 6 wird gleichzeitig verhindert, daß für die rasche Vorwärtsbewegung oder Rückwärtsbewegung der Werkzeugschneide eine bestimmte Phasenlage beachtet werden müßte.

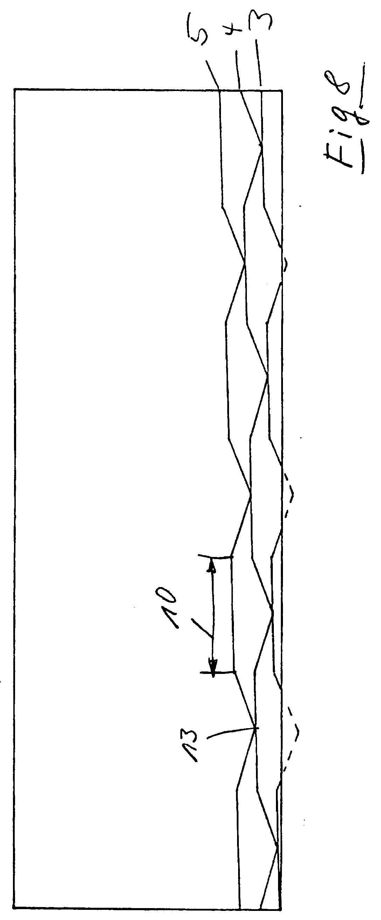

Die Variante nach Figur 8 zeigt wiederum einen Bewegungsablauf so wie zu Figur 3 bereits beschrieben. Jedoch ist hier der Werkzeugschneide im Gegensatz zur Variante nach Figur 3 eine kontinuierliche Vorschubgeschwindigkeit gegeben, so daß die Abschnitte 10 nicht ohne Vorschubgeschwindigkeit sondern mit der eingestellten kontinuierlichen Vorschubgeschwindigkeit durchfahren werden.

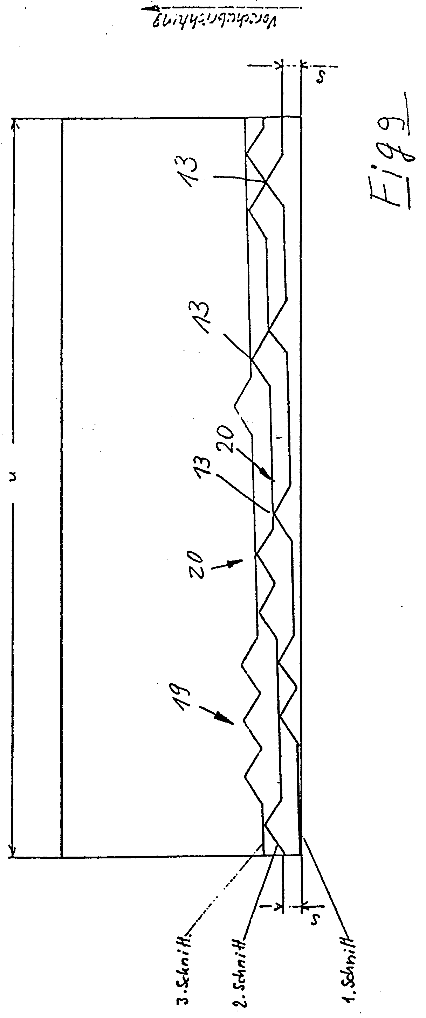

In Figur 9 ist nun eine Variante mit erstem Schnitt, zweitem Schnitt und drittem Schnitt gezeigt, bei der die Werkzeugschneide 1 während einer Umdrehung jeweils den Vorschubweg "S" durchfährt. Hierbei kann bei jeder Umdrehung die Werkzeugschneide in nahezu beliebiger Folge Abschnitte 19 mit schneller Vorwärts- und Rückwärtsbewegung der Werkzeugschneide 1, auch mehrfach hintereinander, und Abschnitte 20 mit kontinuierlichem Vorschub durchfahren. Hierbei entstehen immer wieder in kurzen Abständen Punkte 13, bei denen der Span bricht. Die Länge des Bruchspans wird hierdurch zuverlässig klein gehalten. Die Bewegung des Werkzeuges zur Bildung der Abschnitte 19 und 20 kann durchaus zufällig erfolgen und es wird dennoch ein sicherer Spanbruch in kurzen Abschnitten erreicht. Ein spezielles Einfahren auf eine ganz bestimmte Phasenlage zur Bruchspanerzielung ist nicht erforderlich.

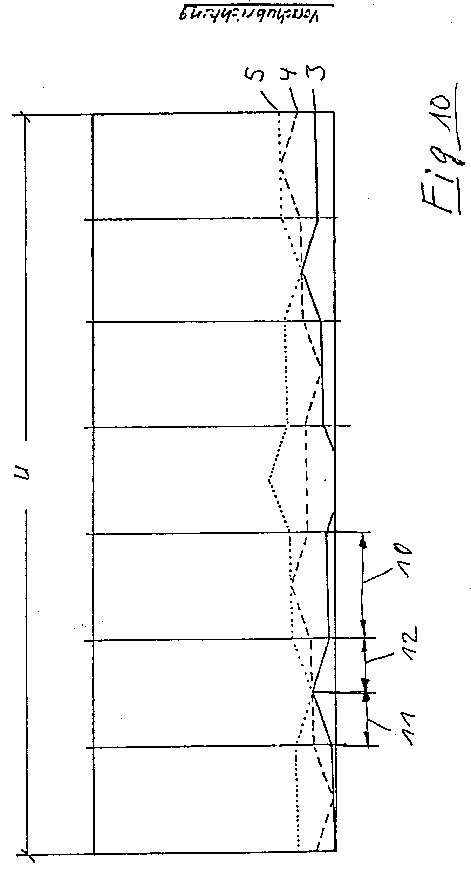

Figur 10 zeigt Vorschublinien 3, 4 und 5, bei denen die Abschnitte 11 und 12 im Verlaufe jeder Umdrehung abwechselnd einmal in Vorschubrichtung und einmal entgegengestzt zur Vorschubrichtung gerichtet sind. Dazwischen liegen dann wieder Abschnitte 10 mit z.B. kontinuierlichem Vorschub. Auch bei dieser Werkzeugbewegung wird ein erwünschtes Oberflächenbild erreicht und ein sicherer Spanbruch gewährleistet. Im Ausführungsbeispiel nach Figur 11 wird immer eine gleiche Phasenlage beibehalten. Dies ist jedoch nicht erforderlich. Im Laufe der Bearbeitung können die Vorschublinien 3, 4 und 5 sich durchaus gegeneinander verschieben, also in ihrer Phasenlage verändern. Es tritt dennoch immer Spanbruch ein. Nur in sehr engen Bereichen einer ungünstigen Phasenlage, die somit auch nur selten auftritt, tritt Spanbruch nicht ein. Liegt jedoch eine kontinuierliche Verschiebung der Phasenlage vor, so sind diese ungünstigen Bereiche sehr rasch durchwandert und es tritt wieder Spanbruch ein. Dies ist ein genau gegenteiliger Effekt zum Stand der Technik, der eine exakte Phasenlage benötigt um Spanbruch zu erzielen und der in allen übrigen Bereichen Spanbruch nicht erzielt.

Figur 11 zeigt eine Variante der Bewegung nach Figur 11. Bei der Varianate nach Figur 12 schließt sich einer raschen Vorwärtsbewegung der Werkzeugschneide 1 im Abschnitt 11 nicht eine Rückzugsbewegung der Werkzeugschneide bis auf die Linie des Grundvorschubes sondern vielmehr darüber hinaus bis auf den geraden Abschnitt der vorherigen Vorschublinie an und kehrt dann erst wieder zur Grundvorschublinie zurück. Immer wird jedoch unabhängig von einer bestimmten Phasenlage sicherer Spanbruch mit kurzen Spänen erzielt.

Die Figuren 12 bis 16 zeigen weitere Beispiele für eine Vorschubbewegung der Werkzeugschneide die mit Sicherheit zum Spanbruch führt. Hierbei sei noch einmal auf Figur 16 hingewiesen, bei der neben den Vorschublinien 3, 4 und 5 noch eine Vorschublinie 21 vorhanden ist mit konstanter Vorschubgeschwindigkeit, bei deren Durchfahren ebenfalls mit Sicherheit Spanbruch auftritt. Die Vorschublinie 21 in Figur 16 kann also verglichen werden mit der Vorschublinie 6 nach Figur 7.

Es ist zu beachten, daß es günstig ist die jeweiligen Abschnitte 11 und -soweit diese auftreten- die Abschnitte 12 recht klein zu halten. Hierdurch wird der Spanbruch begünstigt und das Oberflächenbild verbessert. Es ist dann möglich mit der Länge der Bereiche 10 die Spanlänge bis zum Spanbruch zu bestimmen.

Zur Durchführung des erfindungsgemäßen Verfahrens können übliche CNC-gesteuerte Werkzeugmaschinen verwendet werden. Die CNC-Steuerung muß hierbei geeignet sein nach entsprechender Programmierung die gewünschten Bewegungsabläufe zu steuern. Hierbei kann es nötig werden in das Betriebssystem (Betriebssoftware) einer solchen Steuerung einzugreifen und Änderungen vorzunehmen. Dies ist jedoch mindestens für den Steuerungshersteller problemlos möglich.

Aber auch hydraulisch betätigte und über entsprechende hydraulische Ventile gesteuerte Maschinen, so wie sie in der europäischen Veröffentlichung 0197172 beschrieben sind, können nach erfindungsgemäßer Ergänzung und Erweiterung nach dem erfindungsgemäßen Verfahren arbeiten. Die Figuren 12 bis 19 zeigen den Steuerungsaufbau einer solchen Maschine mit den wesentlichen Maschinenelementen ähnlich Figur 10 nach der europäischen Veröffentlichung Nr. 0197172. Der Ausführungsform nach Figur 10 der genannten europäischen Veröffentlichung entspricht am ehesten noch die Figur 19. Figur 17 zeigt im wesentlichen einen in üblicher Weise zwischen Spitzen eingespannten Radsatz 43 dessen Räder 44 je von einer Werkzeugschneide 1 bearbeitet werden sollen. Jede Werkzeugschneide 1 ist gehalten in einem von einem Zylinder 22 in Planrichtung bewegbaren Support 23. Ein weiterer Zylinder 24 erlaubt eine Längsbewegung des Supportes 23. Der genannte Supportaufbau mit den ebenfalls genannten Betätigungszylindern ist üblich, so daß hierauf nicht näher eingegangen werden muß. Er ist nur einmal dargestellt, kann jedoch doppelt -je Rad einmal- vorhanden sein.

Jeder Zylinder 22 und 24 weist in üblicher Bauart ein 4/3 Wegeventil 25, 26 auf. Diese Bezeichnung sagt aus, daß es sich um ein Wegeventil mit drei Schaltstellungen handelt und vier Anschlüssen. Diese 4/3 Wegeventile 25, 26 sind in ebenfalls üblicher Weise elektromagnetisch betätigbar. In ihrer Mittelstellung sind alle Hydraulikströme gestoppt, so daß auch die angeschlossenen Zylinder 22 und 24 keine Bewegung ausführen können. Der Anschluß dieser 4/3 Wegeventile 25, 26 mit den ihnen zugeordneten Zylindern 24 und 22 ist üblich, aus Figur 18 entnehmbar und bedarf daher keiner näheren Beschreibung. Jedes der beiden 4/3 Wegeventile 25, 26 wird über eine übliche Hydraulikpumpe 30 und weiter über eine jeweils zugeordnete Servoventileinheit 27 bzw. 28 mit dem notwendigen Hydrauliköl versorgt. Das Öl wird entnommen aus dem Tank 29 und über die Vorspannventile 31 und 32 auch wieder dorthin zurückgeführt. Die genannten Vorspannventile sorgen hier lediglich dafür, daß das Rücköl nicht drucklos abfließen kann, andernfalls würde die Rückölleitung leer laufen und Luft in das Hydrauliksystem eindringen.

Der Support 23 weist für die Längsrichtung einen elektronischen Weggeber 34 und für die Planrichtung einen elektronischen Weggeber 33 auf. Weiter ist an der Maschine noch eine Einrichtung 36 vorhanden, mit der das Durchfahren einer vollen Umdrehung des Rades 21 erfaßt werden kann. Diese Einrichtung 36 kann unterschiedlichste Bauarten aufweisen. Sie könnte beispielsweise angebracht sein an der Hauptspindel der Maschine und hierbei als üblicher Drehmelder (Drehwinkelgeber) gestaltet sein. In vielen Fällen reicht auch ein Magnetplättchen am Rad 44, das zusammenwirkt mit einem ortsfesten Näherungsinitiator. Aber auch optische Mittel sind möglich. Diese Einrichtung 36 ist ebenso wie die elektronischen Weggeber 33 und 34 und die Elektromagnete der 4/3 Wegeventile 25 und 26 sowie die entsprechenden elektrischen Betätigungsmittel der Servoventileinheiten 27 und 28 mit der programmierbaren elektrischen Steuerung 35 verbunden.

Im Ausführungsbeispiel nach Figur 12 ist die Werktückkontur 2 in der elektronischen Steuerung 35 gespeichert. Die Steuerung 35 ist nun so programmiert, daß sie auf die 4/3 Wegeventile einen solchen Einfluß nimmt, daß diese in die notwendigen Schaltstellungen gebracht werden um die Zylinder 22 und 24 so zu bewegen, daß die Werkzeugschneide 1 entlang der zu erzeugenden Werkstückkontur 2 verfahren wird. Hierzu erhält die Steuerung 35 die jeweils notwendigen Weginformationen von den linearen Weggebern 33 und 34. Durch entsprechendes Umschalten der 4/3 Wegeventile 25 und 26 kann die gewünschte Vorschubrichtung und durch entsprechende Einstellung der Servoventileinheiten 27 und 28 kann die Vorschubgeschwindigkeit beeinflußt werden. Die genannten Bauteile werden von der Steuerung 35 programmgemäß gesteuert. Die Steuerung 35 erhält hierbei über die Einrichtung 36 eine Information darüber, ob seit der letzten vollständigen Umdrehung wieder eine weitere vollständige Umdrehung abgeschlossen wurde. Sie kann gleichzeitig die Anzahl der durchgeführten Umdrehungen zählen und speichern. Zur Durchführung einer von einer konstanten Vorschubbewegung abweichenden kurzfristigen und schnellen Vorschubbewegung in gewünschter Richtung, muß lediglich von der Steuerung 35 die gewünschte Richtung des Werkzeuges 1 über die 4/3 Wegeventile 25 und 26 geschaltet werden. Da die Geschwindigkeit die gewünscht ist ebenfalls bekannt ist (aus dem der Steuerung eingegebenen Programm), kann die Steuerung nun auch die Servoventileinheiten 27 und 28 -je nach Notwendigkeit beide oder einzeln- auf den notwendigen Durchsatz einstellen. Gleichzeitig kann hierbei die Steuerung 35 speichern, an welcher Stelle sie im Verlaufe beispielsweise einer ersten Umdrehung welche Bewegung mit dem Werkzeug 1 ausgeführt hat. Sie kann dann so programmiert sein, daß die weiteren Bewegungabläufe von der Steuerung 35 selber in Abhängigkeit vom Bewegungsablauf des Werkzeuges 1 während der ersten Umdrehung so errechnet werden, daß immer Werkzeuglagen nach den Figuren 1 bis 16 eintreten, bei denen Spanbruch erreicht wird. Dies ist ohne weiteres möglich, da ja bei der erfindungsgemäßen Werkzeugbewegung die Bedingung für Spanbruch sehr einfach ist. Es kann aber auch auf die Beachtung irgendwelcher Wegzusammenhänge der Werkzeugschneide ganz verzichtet werden und sich darauf beschränkt werden die Werkzeugschneide kurziristig genügend schnell in Vorschubrichtung oder entgegen der Vorschubrichtung zu bewegen.

Figur 18 zeigt eine Variante zur Figur 17. Der einzige Unterschied liegt darin, daß im Ausführungsbeispiel nach Figur 18 die 4/3 Wegeventile 25 und 26 nunmehr ausgebildet sind als Proportionalventile 37 und 38. Diese Proportionalventile 37 und 38 können nicht nur einfach, wie die 4/3 Wegeventile, die entsprechende Durchflußrichtung auf und zu machen, sondern sind gleichzeitig in der Lage die Druchflußmenge zu regeln. Bei der Ausführungsform nach Figur 18 können die Servoventileinheiten 27 und 28 auf einen maximal zulässigen Betrag geöffnet sein, der die höchstzulässige Verschiebegeschwindigkeit der Werkzeugschneide 1 bestimmt. Über die Proportionalventile 37 und 38, die ebenfalls mit der Steuerung 35 verbunden sind, wird dann die jeweils aktuelle Geschwindigkeit und die Bewegungsrichtung von der Steuerung 35 programmgemäß bestimmt. Der übrige Ablauf ist so wie bereits zu Figur 17 beschrieben.

Figur 19 schließlich zeigt eine Variante zu den Figuren 17 und 18. Das Ausführungsbeispiel nach Figur 19 ist eine typische hydraulische Kopiersteuerung, wie sie zu Figur 10 der mehrfach zitierten europäischen Veröffentlichung des Standes der Technik beschrieben ist. Gleiche Bezugszeichen bedeuten hierbei gleiche Bauteile gegenüber den Ausführungsformen nach Figur 17 und 18. Bei der Ausführung nach Figur 19 wird die Vorschubgeschwindigkeit in der von einer Kopierschablone 40 vorgegebenen und vom Fühlerventil 41 abgetasteten Richtung bestimmt von der Servoventileinheit 42, die in ihrer Ausbildung als Stromregelventil das maximale Ölangebot bestimmt. Die Servoventileinheit 42 ist hierbei ebenso wie das 4/3 Wegeventil 25 und die Einrichtung 36 mit der programmierbaren elektrischen Steuerung 39 verbunden, so daß diese die genannten Geräte beeinflussen kann bzw. von diesen Geräten Informationen erhält. Weiterhin weist auch hier der Support 23 einen in Längsrichtung wirksamen elektrischen Weggeber 34 auf.

Im Ausführungsbeispiel nach Figur 19 ist jedoch die Werkstückkontur 2 nicht in der Steuerung 39 gespeichert sondern wird von der Kopierschablone 40 vorgegeben und über das Fühlerventil 41 abgetastet, welches in üblicher und bekannter Weise die notwendigen Ölströme für die Zylinder 22 und 24 steuert. Hierbei bildet der Zylinder 24 in seiner Bewegungsgröße den Leitvorschub. Dies bedeutet, daß sich Vorschubbewegungen, die nicht in Richtung der Längsbewegung des Zylinders 24 von der Werkzeugschneide 1 ausgeführt werden sollen, mit solcher Geschwindigkeit bewegen, daß bei dieser vorgegebenen und konstanten oder auch sich verändernden Vorschubgeschwindigkeit in Leitrichtung dennoch die vorgegebene oder ertastete Werkstückkontur 2 durchfahren wird. Dies bedeutet z.B., daß die Werkzeugschneide 1 mit einer Komponente senkrecht zur Leitvorschubrichtung um so schneller werden muß, je steiler diese Komponente ist, weil ja die Vorschubgeschwindigkeit in Leitvorschubrichtung unverändert bleibt bzw. vorgegeben ist. Eine Geschwindigkeitsänderung im Sinne der Schneidenbewegung nach den Figuren 1 bis 16 wird von der Steuerung 39 über die Servoventileinheit 42 bewegt. Eine Richtungsumkehr wird hierbei durch ein Umschalten des 4/3 Wegeventils 25 erzeugt.

Bei den Ausführungsbeispielen nach den Figuren 17 bis 19 ist sichergestellt, daß jede Bewegung der Werkzeugschneide 1 immer entlang der vorgegebenen Werkstückkontur 2 erfolgt.

Über die Einrichtung 36 oder in sonstiger bekannter und zweckmäßiger Weise erhält die Steuerung 35, 39 Informationen über die zu erzeugende oder erzeugte Schnittgeschwindigkeit, um hieran die jeweilige Vorschubgeschwindigkeit anzupassen.

### Liste der verwendeten Bezugszeichen

- 1: Werkzeugschneide
- 2: Werkstückkontur
- 3: Vorschublinie
- 4: Vorschublinie
- 5: Vorschublinie
- 6: Vorschublinie
- 7: Vorschublinie
- 8: Rotationsachse
- 9: Pfeil
- 10: Abschnitt
- 11: Abschnitt
- 12: Abschnitt
- 13: Punkte
- 14: Abschnitt
- 14': Linie
- 15: Punkt
- 16: Punkt
- 17: Punkt
- 18: Punkt
- 19: Abschnitt
- 20: Abschnitt
- 21: Vorschublinie
- 22: Zylinder
- 23: Support
- 23': Support
- 24: Zylinder
- 25: 4/3 Wegeventil
- 26: 4/3 Wegeventil
- 27: Servoventileinheit
- 28: Servoventileinheit
- 29: Tank
- 30: Pumpe
- 31: Vorspannventil
- 32: Vorspannventil
- 33: elektronischer Weggeber
- 34: elektronischer Weggeber
- 35: programmierbare elektronische Steuerung
- 36: Einrichtung
- 37: Proportionalventil
- 38: Proportionalventil
- 39: programmierbare elektronische Steuerung
- 40: Kopierschablone
- 41: Fühlerventil
- 42: Servoventileinheit
- 43: Radsatz
- 44: Rad

## Patentansprüche

1. Verfahren zur Erzeugung von Bruchspänen bei der Drehbearbeitung von Werkstücken mittels einer sich im Verlauf der Werkstückumdrehung verändernden Vorschubgeschwindigkeit des Drehwerkzeuges, wobei die Vorschubgeschwindigkeit der Werkzeugschneide in zeitlichen Abständen für kurze Zeit relativ zum Zeitbedarf für eine Werkstückumdrehung mindestens einmal, mindestens in ihrem skalaren Betrag verändert wird, wobei die zeitlichen Abstände und damit die Schneidenwege in Werkstücksumfangsrichtung so aufeinander folgen, daß die in Umfangsrichtung entstehenden Bereiche, in denen die Änderung der Vorschubgeschwindigkeit durchgeführt wird, je bei einer nachfolgenden Werkstückumdrehung mindestens einmal in den Umfangswinkelbereich fallen, in dem bei der vorhergehenden Umdrehung ohne Änderung der Vorschubgeschwindigkeit gearbeitet wurde, dadurch gekennzeichnet, daß innerhalb der kurzen Zeit die Werkzeugschneide (1) entlang der Werkstückkontur (2) wieder auf die Vorschublinie (3,4,5) in Umfangsrichtung und auf den vorherigen Vorschubgeschwindigkeitsbetrag eingefahren wird, die bzw. der für die Weiterbearbeitung vorgesehen ist.

2. Verfahren nach Anspruch 1, dadurch gekennzeichnet, daß der skalare Betrag der Vorschubgeschwindigkeit vergrößert wird.

3. Verfahren nach einem der Ansprüche 1 und 2, dadurch gekennzeichnet, daß die Richtung der Vorschubgeschwindigkeit umgekehrt wird.

4. Verfahren nach einem der Ansprüche 1 bis 3, dadurch gekennzeichnet, daß der von der Werkzeugschneide unter einer ersten im Rahmen einer Vorschubgeschwindigkeitsänderung geänderten Vorschubgeschwindigkeit zurückgelegte Vorschubweg nicht erheblich größer ist als der im Verlauf einer Werkstückumdrehung zurückgelegte Vorschubweg der Werkzeugschneide.

5. Verfahren nach einem der Ansprüche 1 bis 4, dadurch gekennzeichnet, daß der im Verlaufe der Änderung der Vorschubgeschwindigkeit zurückgelegt Vorschubweg wieder teilweise zurückgenommen wird.

6. Verfahren nach Anspruch 5, dadurch gekennzeichnet, daß für die Rücknahme des Vorschubweges etwa der gleiche Umfangswinkel am Werkstück durchfahren wird wie bei dem entsprechenden Betrag des Vorschubweges.

7. Verfahren zur Erzeugung von Bruchspänen bei einer mit diskontinuierlichem Vorschub der Werkzeugschneide erfolgenden Drehbearbeitung von Werkstücken, wobei der Werkzeugschneide innerhalb eines kurzen Zeitraumes eine Vorschubgeschwindigkeit in Vorschubrichtung verliehen wird, und die Vorschubgeschwindigkeit innerhalb des gleichen Zeitraumes wieder zu Null wird und sich dieser Vorgang in Zeiträumen wiederholt, die gleich oder größer sind als der Zeitraum für eine Umdrehung zuzüglich des genannten kurzen Zeitraumes, dadurch gekennzeichnet, daß die zeitlichen Abstände, in denen die Vorschubgeschwindigkeit der Werkzeugschneide verändert wird, beliebig unregelmäßig sind.

8. Verfahren nach einem der Ansprüche 1 bis 7, dadurch gekennzeichnet, daß außerhalb der Zeiten der Änderung der Vorschubgeschwindigkeit diese eine stetige ist.

9. Verfahren mindestens nach Anspruch 7, dadurch gekennzeichnet, daß bei vorgegebenem Grundvorschub der Vorschubweg einer vorhergehenden Werkstückumdrehung vorgegeben und gespeichert wird und für eine nachfolgende Umdrehung ein solcher Vorschubweg von der Steuerung errechnet und mit dem Werkzeug ausgeführt wird, daß das Werkzeug in geeigneten Abständen für die gewünschte maximale Spanlänge an den Vorschubweg der Vorangegangenen Umdrehung herangeführt wird.

10. Verfahren nach einem der Ansprüche 1 bis 9, dadurch gekennzeichnet, daß die unter jeder Vorschubgeschwindigkeit erfolgende Vorschubbewegung ausschließlich entlang der zu erzeugenden Werkstückkontur (2) erfolgt.

## Claims

1. Method for the production of fractured chips in the rotational machining of workpieces by using a feed velocity for the rotary tool which varies in the course of the rotation of the workpiece, wherein the feed velocity of the tool cutter is varied at Least once, at least in its scalar value, at time intervals for periods which are short relative to the time needed for one revolution of the workpiece, wherein the time intervals and thus the cutting tracks in the circumferential direction of the workpiece so follow one another that the zones arising in the circumferential direction in which the change of the feed velocity is carried out each fall on a subsequent rotation of the workpiece at least once in the circumferential angular zone which was machined without variation of the feed velocity on the preceding revolution, characterised in that within the short periods the tool cutter (1) is traversed along the workpiece contour (2) again on the feed lines (3,4,5) in the circumferential direction and at the previous feed velocity value provided for the further machining.

2. Method according to claim 1, characterised in that the scalar value of the feed velocity is increased.

3. Method according to one of claims 1 and 2, characterised in that the direction of the feed velocity is reversed.

4. Method according to one of claims 1 to 3, characterised in that the feed path covered by the tool cutter at a first feed velocity varied within the framework of a feed velocity change is not considerably greater than the feed path of the tool cutter covered during the course of one revolution of the workpiece.

5. Method according to one of claims 1 to 4 characterised in that the feed path covered in the course of the variation of the feed velocity is partially reduced again.

6. Method according to claim 5, characterised in that for the return feed path approximately the same circumferential angle on the workpiece is traversed as for the corresponding value of the feed path.

7. Method for the production of fractured chips in a rotational machining of workpieces carried out with discontinuous feed of the tool cutter, wherein the tool cutter is bestowed with a feed velocity in the feed direction within a short time period, and the feed velocity is reduced again to zero within the same time period, and this process is repeated in time periods which are the same as or greater than the time period for one revolution plus the said short time period, characterised in that the time intervals in which the feed velocity of the tool cutter is varied are randomly irregular.

8. Method according to one of claims 1 to 7, characterised in that outside the times of variation of the feed velocity the feed velocity is constant.

9. Method at least according to claim 7, characterised in that for predetermined basic feed the feed velocity of a preceding revolution of the workpiece is predetermined and stored, and for a subsequent revolution such a feed path is calculated by the control means and is performed by the tool, with the tool being brought forward to the feed path of the preceding revolution in suitable spacings for the desired maximum chip lengths.

10. Method according to one of claims 1 to 9, characterised in that the feed movement effected at each feed velocity is effected exclusively along the workpiece contour (2) to be produced.

## Revendications

1. Procédé pour produire des copeaux brisés ou cassés pendant l'usinage de pièces tournées en utilisant une vitesse d'avance variable de l'outil de tournage, dans lequel on modifie, au moins une fois, la vitesse d'avance scalaire du tranchant de l'outil de tour, par intervalles, pendant un temps relativement court par rapport à la durée d'une révolution de la pièce, étant entendu que les intervalles de temps et, de ce fait, les trajets du tranchant se succèdent le long du pourtour de la pièce de telle façon que les domaines résultants, dans le sens du pourtour, dans lesquels s'effectue la modification de la vitesse d'avance, coïncident respectivement, au moins une fois, avec le domaine annulaire périphérique dans lequel, au cours de la rotation précédente, il n'y a pas eu de modification de la vitesse d'avance,
caractérisé en ce que, pendant le temps relativement court dans lequel le tranchant (1) de l'outil se déplace le long du contour de la pièce (2), il s'engage à nouveau sur la ligne d'avance (3, 4, 5) dans le sens du pourtour, et ce, à la vitesse d'avance précédente, prévue pour la poursuite de l'usinage.

2. Procédé selon la revendication 1, caractérisé en ce que l'on agrandit la grandeur scalaire de la vitesse d'avance.

3. Procédé selon l'une des revendications 1 ou 2, caractérisé en ce qu'on inverse la direction de la vitesse d'avance.

4. Procédé suivant l'une quelconque des revendications 1 à 3, caractérisé en ce que le trajet d'avance effectué par le tranchant de l'outil à la vitesse d'avance modifiée dans le cadre d'une modification de la vitesse d'avance n'est pas beaucoup plus grand que le trajet d'avance effectué par la lame de l'outil au cours d'une révolution de ce dernier.

5. Procédé selon l'une quelconque des revendications 1 à 4, caractérisé en ce qu'on récupère, en partie, le trajet d'avance effectué, au cours de la modification de la vitesse d'avance.

6. Procédé selon la revendication 5, caractérisé en ce que pour la récupération du trajet d'avance, on parcourt approximativement le même angle périphérique le long de la pièce que celui du trajet d'avance correspondant.

7. Procédé pour produire des copeaux brisés pendant une opération d'usinage au tour, où le tranchant de l'outil de tour est animé d'un mouvement d'avance discontinu, étant entendu qu'on imprime au tranchant de l'outil, pendant un intervalle de temps relativement court, une certaine vitesse d'avance dans la direction d'avance, et que ladite vitesse d'avance s'annule à nouveau dans le même intervalle de temps, et qu'on répète cette procédure à des intervalles de temps égaux ou supérieurs à l'intervalle de temps nécessaire pour une rotation, en comptant ledit court intervalle de temps mentionné,
caractérisé en ce que les intervalles de temps, pendant lesquels la vitesse du tranchant de l'outil est modifiée, peuvent être irréguliers comme on le désire.

8. Procédé suivant l'une quelconque des revendications 1 à 7, caractérisé en ce que en dehors des intervalles de modification de la vitesse d'avance, celle-ci est constante.

9. Procédé selon l'une quelconque des revendications 1 à 7 caractérisé en ce qu'en cas d'avance de base prédéterminée, le trajet d'avance de la révolution précédente de la pièce est prédéterminé et mémorisé et pour la révolution suivante, un tel trajet d'avance est calculé par la commande et exécuté avec l'outil, en ce que, dans le cas d'une avance de base prédéterminée, le trajet d'avance de la révolution précédente de la pièce est prédéterminé et mémorisé, en ce que pour la révolution suivante un tel trajet d'avance est calculé et exécuté avec l'outil et en ce que à des intervalles pour la longueur de copeau maximale voulue, l'outil est amené au trajet d'avance de la révolution précédente.

10. Procédé selon l'une quelconque des revendications 1 à 9, caractérisé en ce que le mouvement d'avance s'effectuant à chaque vitesse d'avance, se déroule exclusivement le long du contour devant être produit sur la pièce (2).
